# FASCICULE DE BREVET EUROPEEN

(11) **EP 3 549 053 B1**
(45) Date de publication et mention de la délivrance du brevet: **22.05.2024**
(21) Numéro de dépôt: 17804581.1
(22) Date de dépôt: 29.11.2017
(51) Int. Cl.: G06K 7/10

(54) **SYSTÈME DE GESTION, INSTALLATION ET PROCÉDÉ DE MONTAGE ASSOCIÉS**
VERWALTUNGSSYSTEM, ZUGEHÖRIGE ANLAGE UND MONTAGEVERFAHREN
MANAGEMENT SYSTEM, ASSOCIATED INSTALLATION AND ASSEMBLY METHOD

(30) Priorité: 29.11.2016 FR 1661654
(43) Date de publication de la demande: 09.10.2019
(73) Titulaire: Wid Group, 27300 Bernay (FR)
(72) Inventeur: MONGRENIER, Alexandre, 27500 Manneville-Sur-Risle (FR); SUDRE, Benoît, 91190 Gif Sur Yvette (FR)
(74) Mandataire: Lavoix
(86) Numéro de dépôt international: PCT/EP2017/080844
(87) Numéro de publication internationale: WO 2018/099986

(56) Documents cités:
- EP-A2- 2 782 045
- CN-A- 104 573 582
- FR-A1- 3 027 700
- US-A1- 2014 158 766
- JUNG-HYUN CHO ET AL: "An NFC transceiver with RF-powered RFID transponder mode", 12 novembre 2007 (2007-11-12), IEEE ASIAN SOLID-STATE CIRCUITS CONFER, IEEE, PAGE(S) 172 - 175, XP007905495, abrégé

## Description

La présente invention concerne un système de gestion. L'invention se rapporte également à une installation comportant un tel système de gestion ainsi qu'à un procédé de montage du système de gestion.

De manière générale et simplifiée, la fabrication du vin se déroule en sept étapes principales.

Dans une première étape, la récolte des raisins ou vendanges est mise en oeuvre. Il convient de récolter les raisins au moment opportun, la détermination de ce moment demandant un grand savoir-faire. Selon les cas, la récolte est réalisée à la main ou avec des moissonneuses. Lors de la récolte, les grappes de raisin sont triées, notamment pour éliminer les fruits non adaptés.

Lors d'une deuxième étape, un broyage et un pressage ont lieu. L'étape de broyage et de pressage est usuellement mise en oeuvre de manière automatique pour obtenir un jus.

La troisième étape est la fermentation usuellement mise en oeuvre dans une enceinte de fermentation. Le jus subit une transformation chimique, la fermentation alcoolique, pendant laquelle le glucose devient de l'éthanol.

L'étape suivante est la clarification visant à éliminer tous les déchets et résidus du vin. La clarification est mise en oeuvre par un filtre ou par collage.

L'étape qui suit consiste à mettre en oeuvre un vieillissement dans des réservoirs en acier inoxydable ou céramiques, ou dans des barils en bois. L'ensemble des cinq étapes précédentes forme une phase appelée phase d'élevage.

La sixième étape consiste à d'embouteiller le vin. La mise en bouteille du vin se réalise après la phase d'élevage. Lors de cette étape d'embouteillage, les bouteilles sont stérilisées. Il est ensuite utilisé une rinceuse pour laver les bouteilles vides, puis une tireuse pour remplir les bouteilles de vin et enfin une boucheuse pour mettre un bouchon sur le goulot des bouteilles. L'étape d'embouteillages comporte également un capsulage de surbouchage et un étiquetage.

Dans certaines variantes, le vieillissement se fait également en bouteille.

La septième étape est la mise en caisse du vin.

Il est souhaitable que la cadence de fabrication du vin soit accélérée au vu de la demande croissante pour ce produit, et ce sans réduction de qualité.

Or, comme cela a été décrit, l'ensemble des étapes est parfaitement maitrisé et est généralement automatisé de sorte que l'augmentation de la cadence passe par une optimisation fine de chaque étape.

Il existe donc un besoin pour un système permettant d'augmenter la cadence de la fabrication du vin en conservant la même qualité pour le vin produit.

Les demandes de brevets US20140158766, EP2782045 et CN104573582 décrivent des lecteurs RFID pour convoyeurs d'objets comportant une puce électronique. Afin d'atteindre le but mentionné ci-dessus, la présente description porte notamment sur un système de gestion de caisses de bouteilles, chaque bouteille étant munie d'une puce électronique, le système de gestion comportant une première ossature présentant une première forme, une deuxième ossature présentant une deuxième forme, la deuxième forme étant complémentaire de la première forme, l'assemblée des deux ossatures formant un cadre délimitant une ouverture interne adaptée pour l'insertion d'un convoyeur sur lequel sont propres à défiler des caisses de bouteilles à gérer le long d'une direction de défilement, l'ouverture interne présentant une dimension le long d'une direction orthogonale à la direction de défilement comprise entre 300 millimètres et 1000 milimètres, au moins un lecteur de puce étant compris dans le cadre.

Suivant des modes de réalisation particuliers, le système de gestion comprend une ou plusieurs des caractéristiques suivantes, prise(s) isolément ou suivant toutes les combinaisons techniquement possibles :
- l'au moins un lecteur de puce est inséré dans le cadre.
- la première forme est une forme en C présentant présente une partie médiane et deux parties rectilignes et la deuxième forme est une forme en I, la première ossature étant agencée pour que les deux parties rectilignes soient parallèles à une direction transversale à la direction de défilement.
- le cadre comporte quatre panneaux, un lecteur de puce étant présent dans chaque panneau.
- l'au moins un lecteur de puce est une antenne formant une boucle entourant l'ouverture interne.
- le cadre) présente un panneau supérieur, un premier panneau latéral, un panneau inférieur et un deuxième panneau latéral, au moins une des propriétés suivantes étant vérifiée :
   - les panneaux supérieur et inférieur présentent des faces externes présentant une longueur comprise entre 500 mmilimètres et 1200 millimètres,
   - les panneaux supérieur et inférieur présentent des faces externes présentant une longueur comprise entre 700 mmilimètres et 1000 millimètres,
   - les panneaux supérieur et inférieur présentent des faces externes présentant une hauteur comprise entre 500 mmilimètres et 1200 millimètres,
   - les panneaux supérieur et inférieur présentent des faces externes présentant une hauteur comprise entre 800 mmilimètres et 1000 millimètres,
   - l'ouverture interne présente une hauteur comprise entre 300 millimètres et 1000 millimètres, et
   - l'ouverture interne présente une longueur comprise entre 300 millimètres et 1000 millimètres.
- le cadre est pourvu de quatre rails, les quatre rails permettant de loger des éléments.
- le système de gestion comporte une armoire d'alimentation, l'armoire d'alimentation étant solidaire de la deuxième ossature.
- la première forme est une forme en C et la deuxième forme est une forme en I.
- la deuxième ossature est amovible.
- le système de gestion comporte un support supportant le cadre et une mécanique de réglage de la hauteur du support entre deux positions, l'écart en hauteur entre les deux positions étant compris entre 20 centimètres et 70 centimètres.
- le support est pourvu de roulettes.
- le système de gestion comporte une interface de fixation entre les deux ossatures.
- le système de gestion comporte un détecteur de présence d'une caisse de bouteilles dans l'ouverture interne et un terminal utilisateur.
- les bouteilles contiennent une boisson alcoolisée et la puce électronique comporte une information relative à la centilisation de la boisson alcoolisée.
- la puce électronique est propre à fonctionner selon deux protocoles de communications distincts, l'au moins un lecteur de puce compris dans le cadre étant adapté à fonctionner selon le premier protocole de communication et le système de gestion comportant un lecteur adapté à fonctionner selon le deuxième protocole de communication.

La présente description décrit également une installation de préparation de caisses de bouteilles comportant le système de gestion tel que décrit précédemment.

Suivant un mode de réalisation, la présente description décrit aussi une installation, comportant une partie d'embouteillage et une partie de mise en caisse, la partie de mise en caisse comportant un premier convoyeur sur lequel circulent des bouteilles pour remplir une caisse de bouteilles et un deuxième convoyeur adapté à transporter les caisses de bouteilles d'un premier endroit à un deuxième endroit, le deuxième convoyeur étant inséré dans l'ouverture interne du système de gestion.

La présente description décrit aussi un procédé de montage d'un système de gestion de caisses de bouteilles défilant sur un convoyeur, chaque bouteille étant munie d'une puce électronique, le système de gestion comportant une première ossature présentant une première forme, une deuxième ossature présentant une deuxième forme, la deuxième forme étant complémentaire de la première forme, l'assemblée des deux ossatures formant un cadre délimitant une ouverture interne adaptée pour l'insertion d'un convoyeur sur lequel sont propres à défiler des caisses de bouteilles à gérer le long d'une direction de défilement, l'ouverture interne présentant une dimension le long d'une direction orthogonale à la direction de défilement comprise entre 300 millimètres et 1000 millimètres, au moins un lecteur de puce étant inséré dans le cadre. Le procédé comporte une étape d'installation de la première ossature en position pour que la première ossature entoure le deuxième convoyeur, et une étape d'assemblage de la deuxième ossature à la première ossature.

Suivant des modes de réalisation particuliers, le procédé de montage comprend une ou plusieurs des caractéristiques suivantes, prise(s) isolément ou suivant toutes les combinaisons techniquement possibles :
- figure 1, une représentation schématique d'une installation de préparation de caisse de bouteilles de vin comportant un convoyeur,
- figure 2, une vue schématique d'une caisse,
- figure 3, une vue schématique d'une bouteille munie d'une étiquette,
- figure 4, une vue schématique de l'étiquette de la bouteille de la figure 3,
- figure 5, une vue en perspective d'un convoyeur muni d'un exemple de système de gestion,
- figure 6, une vue schématique d'une partie du système de gestion, et
- figure 7, une vue représentant le montage du système de gestion sur un convoyeur.

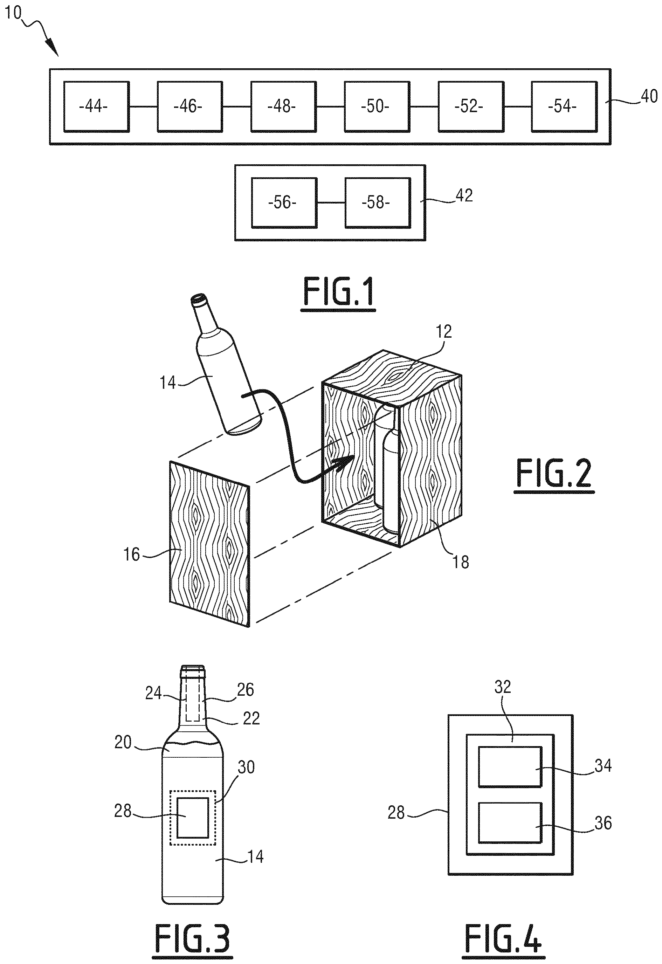

Une installation 10 de préparation de caisse de bouteilles de vin est représentée sur la figure 1.

Les caisses 12 sont destinées à stocker des bouteilles 14.

Dans l'exemple présenté, les caisses 12 sont chacune propres à accueillir six bouteilles 14.

En variante, les caisses 12 sont chacune propres à accueillir un nombre différent de bouteilles 14. Par exemple, le nombre est de trois.

Les caisses 12 comportent deux parties visibles sur la figure 2, à savoir un couvercle 16 et une boîte 18.

Les bouteilles 14 sont mises dans la boîte 18 comme l'indique la flèche sur la figure 2 puis le couvercle 16 est mis sur la boîte 18.

Par exemple, le couvercle 16 est fixé sur la boîte 18 à l'aide de vis.

Les caisses 12 sont en bois.

Dans l'exemple représente, la caisse 12 est de forme parallélépipédique.

Sur la figure 3, il est représenté une bouteille 14.

Chaque bouteille 14 contient une substance liquide 20.

Selon l'exemple proposé, la substance liquide 20 est du vin.

En variante, la substance liquide 20 est de l'alcool.

Selon une autre variante, la substance liquide 20 est du spiritueux.

Dans ces trois cas, la bouteille 14 est une bouteille de boisson alcoolisée.

Selon un autre mode de réalisation, la bouteille 14 est une bouteille de parfum.

La bouteille 14 comporte un fût, un fond, une épaule et un col.

Le fût est la partie principale et la plus large de la bouteille 14. Le fût est parfois désigné par l'expression « corps ».

Le fond ferme le fût pour que la bouteille 14 puisse être posée facilement sur une surface plane. Selon les cas, le fond est plat, piqué (convexe) ou semi-piqué.

L'épaule est la partie évasée qui relie le col au fût.

Le col correspond à la partie effilée au sommet. Le col délimite un espace usuellement appelé goulot 22.

Le goulot 22 comprend généralement une collerette en saillie par rapport à la surface extérieure du goulot 22 et décalée par rapport à l'extrémité supérieure du goulot 22.

Un bouchon 24 est inséré dans le goulot 22.

Une capsule de surbouchage 26 surmonte le bouchon 24.

La capsule de surbouchage 26 est généralement métallique (étain ou aluminium) et comprend une jupe qui s'étend depuis l'extrémité supérieure du goulot 22 sur une certaine hauteur, de l'ordre de 5 cm à 6 cm. Ainsi, le bord inférieur de la capsule de surbouchage 26 est décalé vers le bas par rapport à la collerette d'une distance de l'ordre de 3 à 4 cm.

Lors de l'ouverture de la bouteille 14, la capsule de surbouchage 26 est découpée à l'aide d'un outil tranchant selon une ligne de découpe positionnée juste au-dessus de la collerette. Après une telle découpe, la partie supérieure de la capsule de surbouchage 26 est retirée pour permettre d'extraire le bouchon 24. La partie inférieure de la capsule de surbouchage 26 sous forme d'un manchon est conservée sur la bouteille 14.

Une étiquette 28 et une contre-étiquette 30 sont apposées sur le corps.

L'étiquette 28 est parfois qualifiée d'« étiquette principale ».

L'étiquette 28 comporte une face visible et une face non visible

De fait, les informations légales et permettant d'identifier la bouteille 14 (comme une marque) figurent sur la face visible de l'étiquette 28.

Des informations complémentaires figurent sur la contre-étiquette 30.

Chaque bouteille 14 est munie d'une puce électronique 32.

Selon l'exemple de la figure 4, la puce électronique 32 est présente sur la face non visible de l'étiquette 28.

La puce électronique 32 est collée par un adhésif sur la face non visible de l'étiquette 28.

La mise en place de la puce électronique 32 sur la bouteille 14 peut être réalisée lors de l'embouteillage en utilisant une machine pour déposer des étiquettes.

Néanmoins, d'autres localisations pour la puce électronique 32 sont également possibles comme dans la capsule de surbouchage 26.

La puce électronique 32 comprend un microprocesseur 34 associé à une antenne 36 permettant l'échange de signaux. Le microprocesseur 34 comporte aussi une mémoire propre à mémoriser des informations.

La puce électronique 32 est ainsi associé à des informations que la mémoire du microprocesseur 34 mémorise.

Par exemple, la puce électronique 32 mémorise des informations relatives à la centilisation de la bouteille 14, c'est-à-dire la quantité de vin que la bouteille 14 contient.

Selon un autre exemple, la puce électronique 32 mémorise des informations relatives à la cuve dont provient le vin contenu dans la bouteille 14.

Selon un autre exemple, la puce électronique 32 mémorise des informations relative au site de production, à un identifiant de la bouteille, l'identifiant du producteur de la bouteille, le nom du profil de la bouteille, des données de date et heure d'embouteillage, des données de date et heure de sortie de production.

La puce électronique 32 est un premier moyen de télécommunication sans fil.

Selon l'exemple décrit, la puce électronique 32 est une puce RFID (de l'anglais « radio frequency identification » signifiant en français « identification radiofréquence »).

En raison de normes internationales, chaque puce RFID dispose d'un identifiant unique. Ainsi, deux puces RFID ne peuvent pas avoir le même identifiant.

Pour donner un ordre de grandeur, la puce RFID est un rectangle de 35 mm de longueur par 20 mm de largeur. Néanmoins, la puce RFID n'est pas limitée à cette géométrie et peut avoir des dimensions et des formes variables (carré, rectangulaire, rond,...).

L'installation 10 comporte une partie d'embouteillage 40 et une partie de mise en caisse 42.

La partie d'embouteillage 40 comporte un stérilisateur 44, une rinceuse 46, une tireuse 48, une boucheuse 50, un encapsuleur 52 et une étiqueteuse 54.

La partie de mise en caisse 42 comprend une pluralité de convoyeurs 56 et 58 : un premier convoyeur 56 sur lequel circulent les bouteilles 14 pour remplir une caisse 12 et un deuxième convoyeur 58 adapté à transporter les caisses 12 d'un premier endroit E1 à un deuxième endroit E2.

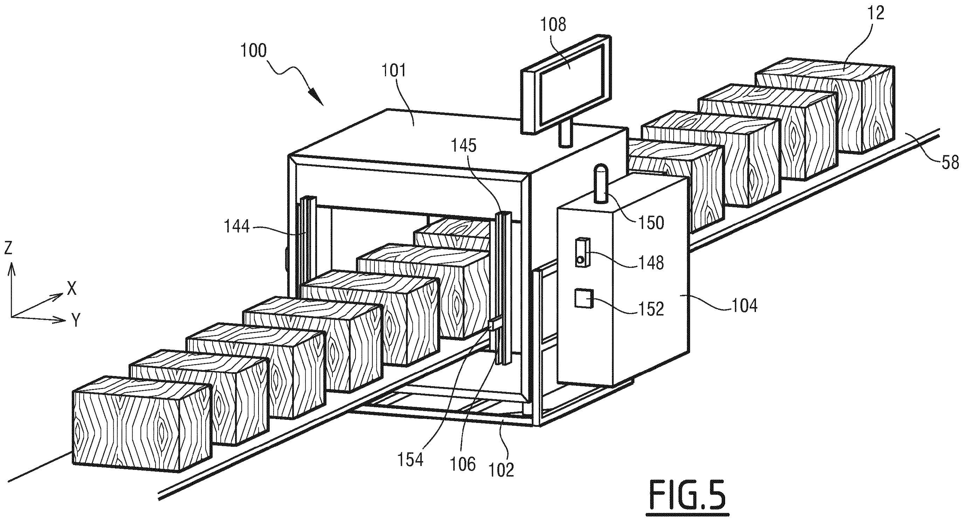

Le deuxième convoyeur 58 sur lequel circulent des caisses 12 et un système de gestion 100 sont représentés sur la figure 5.

Le deuxième convoyeur 58 est une ligne droite.

Il est ainsi défini une direction de défilement correspondant à la direction de défilement des caisses 12. La direction de défilement est symbolisée par un axe X sur la figure 1. Dans la suite de la description, la direction de défilement est notée direction de défilement X.

Il est également défini une direction verticale, la direction verticale étant perpendiculaire à la direction de défilement X et correspondant à la verticale du lieu (la direction normale au sol). La direction verticale est symbolisée par un axe Z visible sur la figure 1. Dans la suite de la description, la direction verticale est notée direction verticale Z.

Il est aussi défini une direction transversale, la direction transversale étant perpendiculaire à la direction de défilement X et à la direction verticale Z. Sur la figure 1, la direction transversale est symbolisée par un axe Y. Dans la suite de la description, la direction transversale est notée direction transversale Y.

Par ailleurs, dans la suite de la description, une dimension d'un élément le long de la direction de défilement X est appelée profondeur de l'élément, une dimension d'un élément le long de la direction verticale Z est appelée hauteur de l'élément et une dimension d'un élément le long de la direction transversale Y est appelée longueur de l'élément.

Le deuxième convoyeur 58 est propre à faire défiler des caisses 12 à gérer le long d'une direction de défilement X.

Selon l'exemple présenté, le deuxième convoyeur 58 est un tapis roulant.

Le système de gestion 100 est un système de supervision de caisses 12.

Par « gestion », il est entendu aussi bien une problématique d'inventaire (nombre de bouteilles 14), qu'une problématique d'identification, c'est-à-dire d'association d'un caisse 12 à des informations spécifiques, notamment relatives au contenu de chaque bouteille 14.

Le système de gestion 100 comporte un cadre 101, un support 102, une armoire 104 d'alimentation, un détecteur de présence 106 et un terminal utilisateur 108.

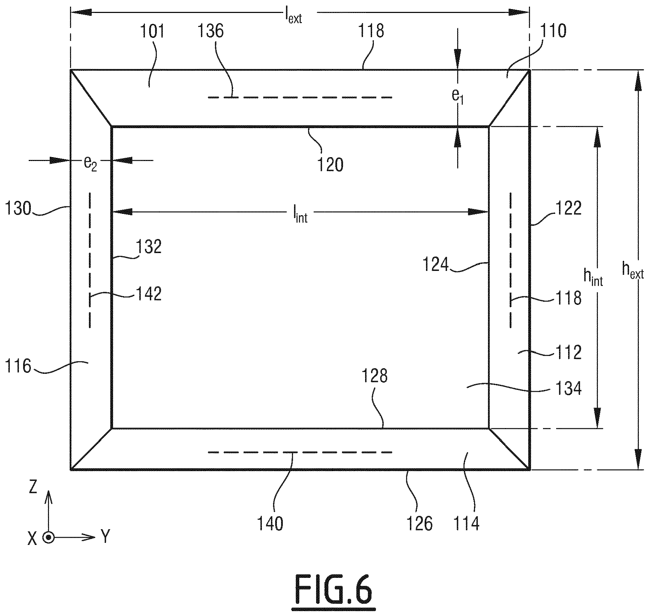

Le cadre 101 est plus spécifiquement représenté sur la figure 6, la figure 6 correspondant à une vue en section dans un plan perpendiculaire à la direction de défilement X.

Le cadre 101 est un cadre de forme rectangulaire.

Le cadre 101 comporte quatre panneaux : un panneau supérieur 110, un premier panneau latéral 112, un panneau inférieur 114 et un deuxième panneau latéral 116.

Dans l'exemple représenté, chaque panneau 110, 112, 114 et 116 présente la même forme, ce qui facilite la fabrication du cadre 101.

Il est défini pour chaque panneau 110, 112, 114 et 116 une face externe et une face interne. Plus précisément, le panneau supérieur 110 présente une face externe 118 et une face interne 120 ; le premier panneau latéral 112 présente une face externe 122 et une face interne 124 ; le panneau inférieur 114 présente une face externe 126 et une face interne 128 et le deuxième panneau latéral 116 présente une face externe 130 et une face interne 132.

L'ensemble de chaque face externe 118, 122, 126 et 130 forme une paroi externe tandis que l'ensemble de chaque face interne 120, 124, 128 et 132 forme une paroi interne. Les parois externe et interne sont reliées par une paroi latérale.

Les faces externes 118 et 126 des panneaux supérieur 110 et inférieur 114 présentent une longueur appelée longueur externe lₑₓₜ.

La longueur externe lₑₓₜ est comprise entre 500 millimètres (mm) et 1200 mm.

L'expression « comprise » est à entendre au sens large. Ainsi, une grandeur A est comprise entre une première valeur A1 et une deuxième valeur A2 lorsque, d'une part, la grandeur A est supérieure ou égale à la première valeur A1 et, d'autre part, la grandeur A est inférieure ou égale à la deuxième valeur A2.

Selon le mode de réalisation décrit, la longueur externe lₑₓₜ est comprise entre 700 mm et 1000 mm.

Plus précisément, selon l'exemple décrit, la longueur externe lₑₓₜ est égale à 900 mm.

Les faces externes 122 et 130 des panneaux latéraux 112 et 116 présentent une hauteur appelée hauteur externe hₑₓₜ.

La hauteur externe hₑₓₜ est comprise entre 500 millimètres (mm) et 1200 mm.

Selon le mode de réalisation décrit, la hauteur externe hₑₓₜ est comprise entre 800 mm et 1000 mm.

Plus précisément, selon l'exemple décrit, la hauteur externe lₑₓₜ est égale à 900 mm.

Il est également défini une première épaisseur e1 correspondant à la distance entre les faces interne 120 et externe 118 du panneau supérieur 110.

Dans l'exemple décrit, la distance entre les faces interne 128 et externe 126 du panneau inférieur 114 est égale à la première épaisseur e1.

Il est aussi défini une deuxième épaisseur e2 correspondant à la distance entre les faces interne 130 et externe 132 du deuxième panneau latéral 116.

Dans l'exemple décrit, la distance entre les faces interne 124 et externe 122 du premier panneau latéral 112 est égale à la deuxième épaisseur e2.

La paroi intérieure, et donc le cadre 101, délimite une ouverture interne 134.

Autrement formulé, l'ouverture interne 134 est délimitée par la face interne 120, 124, 128 et 132 de chaque panneau 110, 112, 114 et 116.

L'ouverture interne 134 est adaptée pour le passage d'un convoyeur et d'une caisse.

L'ouverture interne 134 présente une dimension le long d'une direction orthogonale à la direction de défilement X comprise entre 300 millimètres (mm) et 1000 mm (première relation).

Selon le mode de réalisation décrit, la dimension le long d'une direction orthogonale à la direction de défilement X est comprise entre 500 mm et 1000 mm (deuxième relation).

Plus précisément, la dimension le long d'une direction orthogonale à la direction de défilement X est comprise entre 600 mm et 800 mm (troisième relation).

Plus précisément, selon l'exemple décrit, l'ouverture interne 134 présente une dimension le long d'une direction choisie parmi la direction verticale Z et la direction transversale Y vérifiant les relations précédentes.

Cela signifie, pour la première relation, que la hauteur interne hᵢₙₜ de l'ouverture interne 134 est comprise entre 300 mm et 1000 mm ou que la longueur interne lᵢₙₜ de l'ouverture interne 134 est comprise entre 300 mm et 1000 mm.

Plus précisément, selon l'exemple décrit, la longueur interne lᵢₙₜ de l'ouverture interne 134 est égale à 700 mm.

En outre, selon le cas spécifique, la hauteur interne hᵢₙₜ de l'ouverture interne 134 est égale à 700 mm.

Selon l'exemple présenté, le cadre 101 est en acier inoxydable, ce qui signifie que chaque panneau 110, 112, 114 et 116 est réalisé en acier inoxydable.

Le cadre 101 est pourvu d'une fixation par double plaque permettant de supprimer l'épaulement.

Au moins un lecteur de puce est présent dans l'épaisseur d'un des panneaux 110, 112, 114 et 116.

En variante, le cadre 101 comporte chaque lecture de puce. Par exemple, le lecture de puce est posé sur un des panneaux 110, 112, 114 et 116.

Dans ce contexte, chaque lecteur se présente sous la forme d'une antenne.

Il est à noter que chaque lecteur est alors un deuxième moyen de communication sans fil propre à interagir avec au moins un premier moyen de communication sans fil.

Selon l'exemple de la figure 6, un lecteur de puce est présent dans chaque panneau 110, 112, 114 et 116.

Plus précisément, un premier lecteur de puce 136 est présent dans le panneau supérieur 110 ; un deuxième lecteur de puce 138 est présent dans le premier panneau latéral 112 ; un troisième lecteur de puce 140 est présent dans le panneau inférieur 114, et un quatrième lecteur de puce 142 est présent dans deuxième panneau latéral 116.

Les quatre lecteurs de puce 136, 138, 140 et 142 permettent ainsi de détecter une bouteille 12 par envoi d'ondes depuis quatre endroits distincts dans l'espace, ce qui permet de garantir une bonne probabilité de détection.

Le cadre 101 est également pourvu de quatre rails. Deux rails 144, 145 sont visibles sur la figure 5.

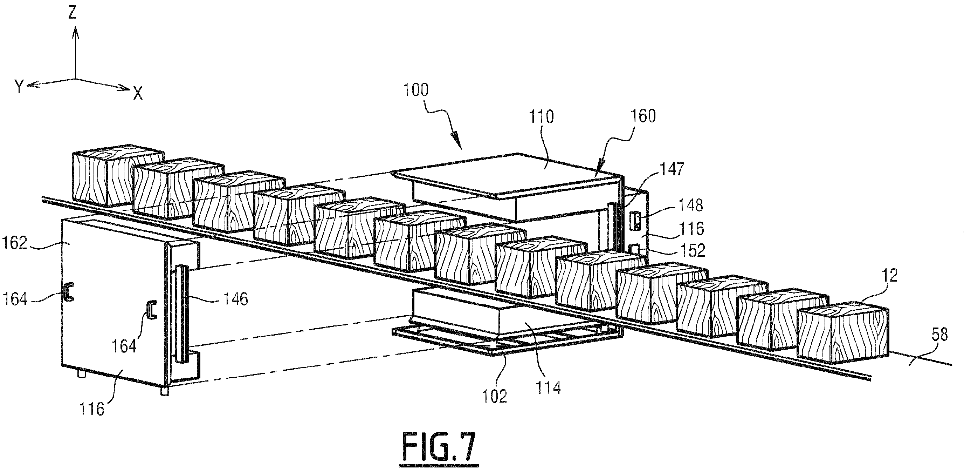

Les autres rails 146, 147 sont situés de l'autre côté de la partie visible du système de gestion 100 sur la figure 5 et sont similaires aux deux rails 144, 145. Les autres rails 146 et 147 sont visibles sur la figure 7.

Les rails 144 et 145 s'étendent principalement selon la direction verticale Z.

Les rails 144 et 145 ont une section transversale en forme de U. De tels rails 144 et 146 sont parfois qualifiés de « profilés en U ».

Les rails 144 et 145 sont réalisés en aluminium.

Les rails 144 et 145 sont placés de part et d'autre du deuxième convoyeur 58.

Les rails 144 et 145 permettent de loger aisément des éléments offrant des fonctionnalités additionnelles au système de gestion 100.

Dans l'exemple décrit, les éléments font partie du détecteur de présence 106.

Le support 102 est propre à supporter le cadre 101.

Le support 102 est réglable le long de la direction verticale Z.

Pour cela, le support 102 comporte une mécanique de réglage de la hauteur du support 102.

Le mécanisme de réglage est, par exemple, un ensemble de quatre tiges filétées réglables en hauteur.

Le support 102 est ainsi propre à régler la position du cadre 101 entre deux positions.

La différence en hauteur entre les deux positions est comprise entre 300 mm et 700 mm.

Selon l'exemple décrit, la différence en hauteur entre les deux positions est égale à 500 mm.

Selon un mode de réalisation, le support 102 comporte des roulettes facilitant le transport du support 102.

L'armoire 104 d'alimentation comporte l'ensemble des alimentations permettant d'alimenter en courant électrique les quatre lecteurs de puce 136, 138, 140 et 142.

Par exemple, l'armoire 104 comprend des alimentations propres à produire du 220 V en étant alimentées sur le secteur.

L'armoire 104 est pourvue d'une interface 148 assurant la télécommunication entre le terminal utilisateur 108 et un réseau global, comme Internet.

En variante, l'armoire 104 est pourvue d'une interface 148 assurant la télécommunication entre le terminal utilisateur 108 et un réseau local. A titre d'exemple, dans un tel mode de réalisation, l'interface 148 est un commutateur Ethernet.

L'armoire 104 comprend aussi une colonne lumineuse 150.

Dans l'exemple représenté, la colonne lumineuse 150 a une première couleur lorsqu'une caisse 12 est dans l'ouverture interne 134 et une deuxième couleur lorsqu'aucune caisse 12 n'est présente dans l'ouverture interne 134.

L'armoire 104 comporte également une sécurité 152 actionnable manuellement par un opérateur.

L'actionnement de la sécurité 152 permet un arrêt en sécurité du système de gestion 100.

En variante, l'armoire 104 comporte également un ou plusieurs lecteurs de puce.

Chaque lecteur de puce est adapté pour interagir avec au moins une puce électronique 32.

Le protocole de fonctionnement du ou des lecteurs de puce est avantageusement distinct du protocole de fonctionnement des quatre lecteurs de puce 136, 138, 140 et 142 insérés dans le cadre 101.

Le détecteur de présence 106 est propre à détecter la présence d'une caisse 12 dans l'ouverture interne 134.

Par exemple, comme visible en partie sur la figure 5, le détecteur de présente comporte une source de lumière (par exemple un laser) et une photodiode 154 coopérant pour détecter tout objet franchissant une ligne prédéfinie.

La source de lumière et la photodiode 154 sont insérées sur des pieds ayant une forme complémentaire avec les rails 144 et 145.

Selon l'exemple proposé, le détecteur de présence 106 est également propre à détecter que la caisse 12 quitte l'ouverture interne 134.

Pour cela, une autre source de lumière et une autre photodiode sont installés sur les autres rails 147 et 148.

Le détecteur de présence 106 coopère avec la colonne lumineuse 150 pour que la couleur de la colonne lumineuse 150 change en fonction de la présence d'une caisse 12 dans l'ouverture interne 134.

D'autres types de détecteur de présence 106 sont possibles, comme une cellule associée à un réflecteur.

Le terminal utilisateur 108 est, par exemple, un assistant personnel numérique plus généralement désigné sous le sigle PDA pour le terme anglais de « personal digital assistant ».

Le terminal utilisateur 108 est assimilable à un module de traitement.

Le terminal utilisateur 108 comprend un logiciel de traitement mémorisé dans une mémoire, un processeur sur lequel le logiciel de traitement peut être exécuté, et une interface homme/machine comprenant selon le cas représenté un écran.

En variante, l'interface homme/machine comporte un écran et un clavier.

Le terminal utilisateur 108 est relié aux quatre lecteurs de puce 136, 138, 140 et 142.

Selon le cas proposé, un contrôleur situé dans l'armoire 104 assure le lien entre le terminal utilisateur 108 et les quatre lecteurs de puce 136, 138, 140 et 142.

Le terminal utilisateur 108 permet d'effectuer plusieurs opérations que sont l'identification, la création, l'association d'informations et la suppression d'informations.

Dans ce qui suit, seule la partie identification est plus spécifiquement décrite.

Le fonctionnement de l'installation 10, et en particulier le fonctionnement du système de gestion 100, est maintenant décrit.

Le fonctionnement de l'installation 10 est conforme au fonctionnement d'une installation 10 selon l'état de la technique sauf au niveau du deuxième convoyeur 58 utilisant le système de gestion 100. Aussi, dans ce qui suit, uniquement les opérations au niveau du deuxième convoyeur 58 sont décrites.

Une caisse 12 dont le contenu est à vérifier est mise en entrée du système de gestion 10.

Le détecteur de présence 106 détecte l'arrivée de la caisse 12 et fait changer la couleur de la colonne lumineuse 150.

Par exemple, la couleur passe du vert au rouge.

Le terminal utilisateur 108 est alors utilisé pour demander que les quatre lecteurs de puce 136, 138, 140 et 142 interagissent avec les puces électroniques 32 présentes sur les bouteilles.

L'interaction permet au terminal utilisateur 108 de récupérer des informations présentes sur les puces électroniques 32.

Le terminal utilisateur 108 vérifie alors ces informations au regard d'une base de données mémorisant des informations similaires pour la caisse 12 à vérifier.

La caisse 12 quitte ensuite l'ouverture interne 134 entraînant le passage de la colonne lumineuse 150 de la couleur rouge à verte.

Dans l'hypothèse où les informations de la base de données et les informations détectées par les quatre lecteurs de puce 136, 138, 140 et 142 coïncident, la caisse 12 est considérée comme valide et envoyée pour être livrée à un revendeur ou à un consommateur.

Dans le cas contraire, la caisse 12 est éliminée du deuxième convoyeur 58.

Le système de gestion 100 permet donc de vérifier rapidement le contenu d'une caisse 12 sans avoir à ouvrir la caisse 12.

De plus, la vérification peut être aussi précise que souhaitée puisque le nombre d'informations peut être aussi élevé que souhaité.

En particulier, le système de gestion 100 est compatible avec des caisses 12 dites « panachées » contenant des bouteilles 14 avec des vins différents.

A la propriété ou chez les prestataires de conditionnement, l'identification et le contrôle de toutes les caisses 12 sont ainsi optimisés, permettant notamment d'anticiper la préparation de commandes.

Il est à noter que le papillotage des bouteilles 14 contenues dans les caisses 12 n'empêche pas d'utiliser le système de gestion 100.

En outre, le système de gestion 100 est aisé à monter comme cela apparaît en référence à la figure 7 qui décrit le montage du système de gestion 100 sur le deuxième convoyeur 58.

En effet, il apparaît que le cadre 101 présente deux ossatures : une première ossature 160 et une deuxième ossature 162.

La première ossature 160 présente une première forme.

La première forme est la forme de la section de la première ossature 160 selon la direction de défilement X.

Selon l'exemple décrit, la deuxième forme est une forme en C.

Le C présente une partie médiane et deux parties rectilignes. La partie médiane est parallèle à la direction verticale Z tandis que les deux parties rectilignes sont parallèles à la direction transversale Y.

En variante, la première ossature 160 est escamotable.

La deuxième ossature 162 présente une deuxième forme.

Selon l'exemple proposé, la deuxième ossature 162 et l'armoire 104 sont solidaires.

La deuxième forme est une forme en section selon la direction de défilement X.

La deuxième forme est complémentaire de la première forme.

Par l'expression « complémentaire » dans ce contexte, il est entendu que l'assemblée des deux ossatures 160 et 162 forment le cadre 101.

Selon l'exemple décrit, la première forme est une forme en I

Le « I » s'étend principalement selon la direction verticale Z.

La deuxième ossature 162 est amovible.

Les deux ossatures 160 et 162 sont assemblables par une interface de fixation.

Dans l'exemple proposé, l'interface de fixation est une vis propre à coopérer avec un trou correspondant.

De plus, pour faciliter la préhension, la première ossature 160 est munie de deux poignées 164.

Cela permet donc un montage aisé du système de gestion 100.

Le procédé de montage comporte une étape d'installation de la première ossature 160 en position pour que la première ossature 162 entoure le deuxième convoyeur 58.

Pour cela, il est avantageusement utilisé le support 102 qui permet de régler la position de la première ossature 160 le long de la direction verticale Z.

Le procédé de montage comprend une étape d'assemblage de la deuxième ossature 162 à la première ossature 160.

Dans l'étape d'assemblage, il est utilisé les poignées 164 ainsi que l'interface de fixation.

Le montage est d'une part aisé et, comme cela apparaît, d'autre part, valable indépendamment du convoyeur.

Il en résulte que le système de gestion 100 est compatible avec tout type de convoyeur, ce qui en fait un système de gestion 100 qui peut être qualifié d'« universel ».

D'autres modes de réalisation sont également envisageables pour le système de gestion 100.

Notamment, les puces électroniques 32 peuvent être de différents types.

Ainsi, les puces électroniques correspondent à tous les dispositifs électroniques (circuits intégrés) permettant de stocker au moins une information et de communiquer avec un autre dispositif selon un protocole de communication sans contact.

Ainsi, selon un mode de réalisation particulier, la puce électronique 32 est une puce NFC (en anglais « Near Field Communication » qui signifie « communication de champ proche »), permettant la lecture en champ proche (avec une distance maximum d'environ 4 cm entre la puce électronique 32 de la bouteille 14 et le lecteur de puce électronique).

Le protocole de communication est alors un protocole de communication en champ proche de type NFC défini selon les normes reconnues par le Forum NFC, dont les normes ISO/CEI 14443-1 à ISO/CEI 14443-4.

Il est à noter que la norme NFC est une norme de communication sans fil (appelée communication en champ proche ou communication NFC) permettant de faire communiquer les puces électroniques avec un très large nombre d'appareils, notamment les téléphones mobiles sans fil. Ceci permet de tracer la bouteille 14 avant comme après sa mise dans la caisse 12.

Selon un cas particulier, la puce électronique 32 est propre à fonctionner selon deux gammes de fréquences distinctes. En ce sens, la puce électronique 32 peut être qualifiée de puce bi-fréquences.

D'une part, la puce électronique 32 est apte à communiquer selon un premier protocole de communication appelé mode UHF. L'acronyme « UHF » renvoie à la terminologie française d'ultra haute fréquence.

Dans un tel protocole de communication, la puce électronique 32 est apte à émettre ou à recevoir un signal ayant une fréquence comprise entre 300 MHz et 3 000 MHz.

D'autre part, la puce électronique 32 est apte à communiquer selon un deuxième protocole de communication appelé mode HF. L'acronyme « HF » renvoie à la terminologie française d'haute fréquence.

Dans un tel protocole, la puce électronique 32 est apte à émettre ou à recevoir un signal ayant une fréquence comprise entre 3 MHz et 30 MHz.

Le système de gestion 100 comporte au moins un lecteur adapté à fonctionner selon le premier protocole de communication et un lecteur adapté à fonctionner selon le deuxième protocole de communication.

Dans un mode de réalisation spécifique, chaque panneau 110, 112, 114 et 116 comporte deux lecteurs de puce : un lecteur adapté à fonctionner selon le premier protocole de communication (mode UHF) et un lecteur adapté à fonctionner selon le deuxième protocole de communication (mode HF).

Le premier protocole est, par exemple, conforme aux standards ISO14443 (protocole NFC) ou ISO15693 (protocole RFID). La portée de communication selon le premier protocole est de préférence inférieure à 20 centimètres (cm).

Le deuxième protocole est, par exemple, conforme aux standards ISO18000-6C aussi connu sous le nom d'EPC1Gen2. Un tel deuxième protocole correspond à une portée comprise entre 15 centimètres et 10 mètres (m), plus particulièrement comprise entre 5 mètres et 10 mètres.

Selon une autre variante, les deux protocoles de communication sont respectivement un protocole NFC et un protocole RFID.

Une telle puce présente l'avantage que la technologie est inerte, que l'arrachage est destructif, que la puce est propre à résister entre -40°C et 85°C, que sa durée de vie est supérieure à 50 ans et que son épaisseur est inférieure à 0,2 mm.

La puce électronique 32 peut également être réalisée différemment.

Ainsi, de manière générale, la puce électronique 32 comprend un dispositif électronique avec au moins un circuit intégré, plus particulièrement un microprocesseur, et au moins une antenne. Selon les variantes, le dispositif électronique peut être passif ou être semi-passif et intégrer un capteur tel qu'un capteur de température par exemple.

Selon un autre mode de réalisation, le lecteur de puce est une antenne formant une boucle entourant l'ouverture interne 134. La boucle est insérée dans le cadre 101 dans l'épaisseur de chacun des panneaux 110, 112, 114 et 116. Une telle boucle permet d'améliorer les performances du lecteur de puce.

Par exemple, une partie de boucle est insérée dans la première ossature 160 et une autre partie de la boucle est insérée dans la deuxième ossature 162. Lors du montage du système de gestion 100, les deux parties de la boucle sont reliées ensemble pour former la boucle.

L'invention correspond à toutes combinaisons techniquement possibles des modes de réalisation précédemment décrits, l'invention étant délimitée par les revendications.

## Revendications

1. Système de gestion (100) de caisses (12) de bouteilles (14), chaque bouteille (14) étant munie d'une puce électronique (32), le système de gestion (100) comportant :
- une première ossature (160) présentant une première forme,
- une deuxième ossature (162) présentant une deuxième forme, la deuxième forme étant complémentaire de la première forme,
l'assemblée des deux ossatures (160, 162) formant un cadre (101) délimitant une ouverture interne (134) adaptée pour l'insertion d'un convoyeur (58) sur lequel sont propres à défiler des caisses (12) de bouteilles (14) à gérer le long d'une direction de défilement (X), l'ouverture interne (134) présentant une dimension le long d'une direction (Y, Z) orthogonale à la direction de défilement (X) comprise entre 300 millimètres et 1000 millimètres, au moins un lecteur de puce (136, 138, 140 et 142) étant compris dans le cadre (101).

2. Système de gestion selon la revendication 1, dans lequel l'au moins un lecteur de puce (136, 138, 140 et 142) est inséré dans le cadre (101).

3. Système de gestion selon la revendication 1 ou 2, dans lequel la première forme est une forme en C présentant présente une partie médiane et deux parties rectilignes et la deuxième forme est une forme en I, la première ossature (160) étant agencée pour que les deux parties rectilignes soient parallèles à une direction transversale (Y) à la direction de défilement (X).

4. Système de gestion selon l'une quelconque des revendications 1 à 3, dans lequel le cadre (101) comporte quatre panneaux (110, 112, 114, 116), un lecteur de puce (136, 138, 140 et 142) étant présent dans chaque panneau (110, 112, 114, 116).

5. Système de gestion selon l'une quelconque des revendications 1 à 4, dans lequel l'au moins un lecteur de puce (136, 138, 140 et 142) est une antenne formant une boucle entourant l'ouverture interne (134).

6. Système de gestion selon l'une quelconque des revendications 1 à 5, dans lequel le cadre (101) présente un panneau supérieur (110), un premier panneau latéral (112), un panneau inférieur (114) et un deuxième panneau latéral (116), au moins une des propriétés suivantes étant vérifiée :
- les panneaux supérieur (110) et inférieur (114) présentent des faces externes (118, 126) présentant une longueur comprise entre 500 milimètres et 1200 millimètres,
- les panneaux supérieur (110) et inférieur (114) présentent des faces externes (118, 126) présentant une longueur comprise entre 700 milimètres et 1000 millimètres,
- les panneaux supérieur (110) et inférieur (114) présentent des faces externes (118, 126) présentant une hauteur comprise entre 500 milimètres et 1200 millimètres,
- les panneaux supérieur (110) et inférieur (114) présentent des faces externes (118, 126) présentant une hauteur comprise entre 800 milimètres et 1000 millimètres,
- l'ouverture interne (134) présente une hauteur comprise entre 300 millimètres et 1000 millimètres, et
- l'ouverture interne (134) présente une longueur comprise entre 300 millimètres et 1000 millimètres.

7. Système de gestion selon l'une quelconque des revendications 1 à 6, dans lequel le cadre (101) est pourvu de quatre rails (144, 145), les quatre rails (144, 145) permettant de loger des éléments.

8. Système de gestion selon l'une quelconque des revendications 1 à 7, dans lequel le système de gestion (100) comporte une armoire d'alimentation (104), l'armoire d'alimentation (104) étant solidaire de la deuxième ossature (162).

9. Système de gestion selon l'une quelconque des revendications 1 à 8, dans lequel le système de gestion (100) comporte un support (102) supportant le cadre (101) et une mécanique de réglage de la hauteur du support (102) entre deux positions, l'écart en hauteur entre les deux positions étant compris entre 20 centimètres et 70 centimètres, le support (102) étant, de préférence, pourvu de roulettes.

10. Système de gestion selon l'une quelconque des revendications 1 à 9, dans lequel le système de gestion (100) comporte un détecteur de présence (106) d'une caisse (12) de bouteilles (14) dans l'ouverture interne (134) et un terminal utilisateur (108).

11. Système de gestion selon l'une quelconque des revendications 1 à 10, dans lequel les bouteilles (14) contiennent une boisson alcoolisée et la puce électronique (32) comporte une information relative à la centilisation de la boisson alcoolisée.

12. Système de gestion selon l'une quelconque des revendications 1 à 11, dans lequel la puce électronique (32) est propre à fonctionner selon deux protocoles de communications distincts, l'au moins un lecteur de puce (136, 138, 140 et 142) compris dans le cadre (101) étant adapté à fonctionner selon le premier protocole de communication et le système de gestion (100) comportant un lecteur adapté à fonctionner selon le deuxième protocole de communication.

13. Installation de préparation de caisses de bouteilles (10) comportant le système de gestion (100) selon l'une quelconque des revendications 1 à 12.

14. Installation selon la revendication 13, comportant une partie d'embouteillage (40) et une partie de mise en caisse (44), la partie de mise en caisse (42) comportant un premier convoyeur (56) sur lequel circulent des bouteilles (14) pour remplir une caisse (12) de bouteilles (14) et un deuxième convoyeur (58) adapté à transporter les caisses (12) d'un premier endroit (E1) à un deuxième endroit (E2), le deuxième convoyeur (58) étant inséré dans l'ouverture interne (134) du système de gestion (100).

15. Procédé de montage d'un système de gestion (100) de caisses (12) de bouteilles (14) défilant sur un convoyeur (58), chaque bouteille (14) étant munie d'une puce électronique (32), le système de gestion (100) comportant :
- une première ossature (160) présentant une première forme,
- une deuxième ossature (162) présentant une deuxième forme, la deuxième forme étant complémentaire de la première forme,
l'assemblée des deux ossatures (160, 162) formant un cadre (101) délimitant une ouverture interne (134) adaptée pour l'insertion d'un convoyeur (54) sur lequel sont propres à défiler des caisses (12) de bouteilles (14) à gérer le long d'une direction de défilement (X), l'ouverture interne (134) présentant une dimension le long d'une direction (Y, Z) orthogonale à la direction de défilement (X) comprise entre 300 mm et 1000 mm, au moins un lecteur de puce (136, 138, 140 et 142) étant inséré dans le cadre (101),
le procédé comportant une étape de :
- installation de la première ossature (160) en position pour que la première ossature (160) entoure le convoyeur (58), et
- assemblage de la deuxième ossature (162) à la première ossature (160).

## Patentansprüche

1. System (100) zur Verwaltung von Kästen (12) mit Flaschen (14), wobei jede Flasche (14) mit einem Mikrochip (32) versehen ist, wobei das Verwaltungssystem (100) umfasst:
- ein erstes Gerüst (160), das eine erste Form aufweist,
- ein zweites Gerüst (162) mit einer zweiten Form, wobei die zweite Form komplementär zur ersten Form ist,
das Zusammenfügen der beiden Gerüste (160, 162) bildet einen Rahmen (101), der eine innere Öffnung (134) begrenzt, die zum Einsetzen eines Förderers (58) geeignet ist, auf den Kästen (12) mit zu verwaltenden Flaschen (14) entlang einer Laufrichtung (X) laufen können. Die innere Öffnung (134) weist eine Abmessung entlang einer Richtung (Y, Z) orthogonal zu der Laufrichtung (X) zwischen 300 Millimetern und 1000 Millimetern auf, wobei mindestens ein Chip-Lesegerät (136, 138, 140 und 142) in dem Rahmen (101) enthalten ist.

2. Verwaltungssystem nach Anspruch 1, bei dem das mindestens eine Chip-Lesegerät (136, 138, 140 und 142) in den Rahmen (101) eingesetzt wird.

3. Verwaltungssystem nach Anspruch 1 oder 2, wobei die erste Form eine C-Form mit einem Mittelteil und zwei geraden Abschnitten ist und die zweite Form eine I-Form ist, wobei das erste Gerüst (160) so angeordnet ist, dass die beiden geraden Abschnitte parallel zu einer Richtung quer (Y) zu der Laufrichtung (X) sind.

4. Verwaltungssystem nach einem der Ansprüche 1 bis 3, wobei der Rahmen (101) vier Felder (110, 112, 114, 116) aufweist, wobei in jedem Feld (110, 112, 114, 116) ein Chip-Lesegerät (136, 138, 140 und 142) vorhanden ist.

5. Verwaltungssystem nach einem der Ansprüche 1 bis 4, wobei das mindestens eine Chip-Lesegerät (136, 138, 140 und 142) eine Antenne ist, die eine Schleife bildet, die die innere Öffnung (134) umgibt.

6. Verwaltungssystem nach einem der Ansprüche 1 bis 5, wobei der Rahmen (101) ein oberes Feld (110), ein erstes Seitenfeld (112), ein unteres Feld (114) und ein zweites Seitenfeld (116) aufweist, wobei mindestens eine der folgenden Eigenschaften überprüft wird:
- das obere (110) und das untere (114) Feld haben Außenflächen (118, 126) mit einer Länge zwischen 500 Millimetern und 1200 Millimetern,
- das obere (110) und das untere (114) Feld haben Außenflächen (118, 126) mit einer Länge zwischen 700 Millimetern und 1000 Millimetern,
- das obere (110) und das untere (114) Feld haben Außenflächen (118, 126) mit einer Höhe zwischen 500 Millimetern und 1200 Millimetern,
- das obere (110) und das untere (114) Feld haben Außenflächen (118, 126) mit einer Höhe zwischen 800 Millimetern und 1000 Millimetern,
- die innere Öffnung (134) weist eine Höhe zwischen 300 Millimetern und 1000 Millimetern auf und
- die innere Öffnung (134) weist eine Länge zwischen 300 Millimetern und 1000 Millimetern auf.

7. Verwaltungssystem nach einem der Ansprüche 1 bis 6, bei dem der Rahmen (101) mit vier Schienen (144, 145) versehen ist, wobei die vier Schienen (144, 145) die Aufnahme von Elementen ermöglichen.

8. Verwaltungssystem nach einem der Ansprüche 1 bis 7, wobei das Verwaltungssystem (100) einen Versorgungsschrank (104) umfasst, wobei der Versorgungsschrank (104) fest mit dem zweiten Gerüst (162) verbunden ist.

9. Verwaltungssystem nach einem der Ansprüche 1 bis 8, wobei das Verwaltungssystem (100) einen Träger (102), der den Rahmen (101) trägt, und eine Mechanik zur Höhenverstellung des Trägers (102) zwischen zwei Positionen umfasst, wobei der Höhenunterschied zwischen den beiden Positionen zwischen 20 Zentimetern und 70 Zentimetern liegt, wobei der Träger (102) vorzugsweise mit Rollen versehen ist.

10. Verwaltungssystem nach einem der Ansprüche 1 bis 9, wobei das Verwaltungssystem (100) einen Präsenzmelder (106) für Kästen (12) mit Flaschen (14) in der inneren Öffnung (134) und ein Benutzerendgerät (108) umfasst.

11. Verwaltungssystem nach einem der Ansprüche 1 bis 10, bei dem die Flaschen (14) ein alkoholisches Getränk enthalten und der Mikrochip (32) eine Information über die Zentilisierung des alkoholischen Getränks enthält.

12. Verwaltungssystem nach einem der Ansprüche 1 bis 11, bei dem der Mikrochip (32) geeignet ist, gemäß zwei verschiedenen Kommunikationsprotokollen zu funktionieren, wobei das mindestens eine Chip-Lesegerät (136, 138, 140 und 142), das in dem Rahmen (101) enthalten ist, sich dazu eignet gemäß dem ersten Kommunikationsprotokoll zu funktionieren und das Verwaltungssystem (100) ein Lesegerät umfasst, das gemäß dem zweiten Kommunikationsprotokoll funktioniert.

13. Anlage zum Vorbereiten von Flaschenkästen (10) mit dem Verwaltungssystem (100) nach einem der Ansprüche 1 bis 12.

14. Anlage nach Anspruch 13, mit einem Abfüllteil (40) und einem Kastenverpackungsteil (44), wobei der Kastenverpackungsteil (42) einen ersten Förderer (56) aufweist, auf den Flaschen (14) zum Füllen eines Kastens (12) mit Flaschen (14) zirkulieren, und einen zweiten Förderer (58), der dazu geeignet ist, die Kästen (12) von einem ersten Ort (E1) zu einem zweiten Ort (E2) zu transportieren, wobei der zweite Förderer (58) in die innere Öffnung (134) des Verwaltungssystems (100) eingesetzt ist.

15. Verfahren zur Montage eines Verwaltungssystems (100) für Kästen (12) mit Flaschen (14), die auf einem Förderer (58) vorbeiziehen, wobei jede Flasche (14) mit einem Mikrochip (32) versehen ist und das Verwaltungssystem (100) Folgendes umfasst:
- ein erstes Gerüst (160), das eine erste Form aufweist,
- ein zweites Gerüst (162) mit einer zweiten Form, wobei die zweite Form komplementär zur ersten Form ist,
das Zusammenfügen der beiden Gerüste (160, 162) bildet einen Rahmen (101), der eine innere Öffnung (134) begrenzt, die zum Einsetzen eines Förderers (54) geeignet ist, auf den Kästen (12) mit zu verwaltenden Flaschen (14) entlang einer Laufrichtung (X) laufen können. Die innere Öffnung (134) weist eine Abmessung entlang einer Richtung (Y, Z) orthogonal zur Laufrichtung (X) zwischen 300 mm und 1000 mm auf, wobei mindestens ein Chip-Lesegerät (136, 138, 140 und 142) in den Rahmen (101) eingefügt ist,
das Verfahren umfasst einen folgenden Schritt:
- Installieren des ersten Gerüsts (160) in einer Position, so dass das erste Gerüst (160) den Förderer (58) umgibt, und
- Zusammenfügen des zweiten Gerüsts (162) mit dem ersten Gerüst (160).

## Claims

1. Management system (100) for cases (12) of bottles (14), wherein each bottle (14) is provided with an electronic chip (32), the management system (100) comprising:
- a first frame (160) having a first shape,
- a second frame (162) having a second shape, the second shape being complementary to the first shape,
the assembly of the two frames (160, 162) forming a framework (101) delimiting an internal opening (134) intended for the insertion of a conveyor (58) on which cases (12) of bottles (14) will run in a running direction (X), the inner opening (134) having a dimension along a direction (Y, Z) orthogonal to the running direction (X) of between 300 millimeters and 1000 millimeters, at least one chip reader (136, 138, 140 and 142) being included in the framework (101).

2. Management system according to claim 1, wherein the at least one chip reader (136, 138, 140 and 142) is inserted into the framework (101).

3. Management system according to claim 1 or 2, wherein the first frame is C-shaped having a middle portion and two straight portions and the second frame is I-shaped, the first frame (160) being arranged so that the two straight portions are parallel to a direction transverse (Y) to the running direction (X).

4. Management system according to any one of claims 1 to 3, wherein the frame (101) comprises four panels (110, 112, 114, 116), with a chip reader (136, 138, 140 and 142) being present in each panel (110, 112, 114, 116).

5. Management system according to any one of claims 1 to 4, the at least one chip reader (136, 138, 140 and 142) is a loop antenna surrounding the internal opening (134).

6. Management system according to any one of claims 1 to 5, wherein the framework (101) has an upper panel (110), a first side panel (112), a bottom panel (114) and a second side panel (116), at least one of the following properties being verified:
- the upper panel (110) and lower panel (114) have outer faces (118, 126) having a length of between 500 millimeters and 1200 millimeters,
- the upper panel (110) and lower panel (114) have outer faces (118, 126) having a length of between 700 millimeters and 1000 millimeters,
- the upper panel (110) and lower panel (114) have outer faces (118, 126) having a height of between 500 millimeters and 1200 millimeters,
- the upper panel (110) and lower panel (114) have outer faces (118, 126) having a height of between 800 millimeters and 1000 millimeters,
- the internal opening (134) has a height of between 300 millimeters and 1000 millimeters, and
- the internal opening (134) has a length of between 300 millimeters and 1000 millimeters.

7. Management system according to any one of claims 1 to 6, wherein the framework (101) is provided with four rails (144, 145), i.e. the four rails (144, 145) for housing elements.

8. Management system according to any one of claims 1 to 7, wherein the management system (100) comprises a power cabinet (104), the power cabinet (104) being secured to the second frame (162).

9. Management system according to any one of claims 1 to 8, wherein the management system (100) comprises a support (102) for the framework (101) and a mechanism for adjusting the height of the support (102) between two positions, the difference in height between the two positions being between 20 centimeters and 70 centimeters, the support (102) being preferably provided with rollers.

10. Management system according to any one of claims 1 to 9, wherein the management system (100) comprises a presence detector (106) of a case (12) of bottles (14) in the internal opening (134) and a user terminal (108).

11. Management system according to any one of claims 1 to 10, wherein the bottles (14) contain an alcoholic beverage and the electronic chip (32) comprises information relating to the contents of the alcoholic beverage.

12. Management system according to any one of claims 1 to 11, wherein the electronic chip (32) is designed to operate according to two distinct communication protocols, the at least one chip reader (136, 138, 140 and 142) comprised in the framework (101) being designed to operate according to the first communication protocol, and the management system (100) comprising a reader designed to operate according to the second communication protocol.

13. Bottle case preparation installation (10) comprising the management system (100) according to any one of claims 1 to 12.

14. installation according to claim 13, comprising a bottling portion (40) and a casing portion (44), the casing portion (42) comprising a first conveyor (56) on which bottles (14) run to fill a case (12) of bottles (14) and a second conveyor (58) designed to transport the cases (12) from a first location (E1) to a second location (E2), the second conveyor (58) being inserted into the internal opening (134) of the management system (100).

15. Method for assembling a management system (100) of cases (12) of bottles (14) running on a conveyor (58), each bottle (14) being provided with an electronic chip (32), the management system (100) comprising:
- a first frame (160) having a first shape,
- a second frame (162) having a second shape, the second shape being complementary to the first shape,
the assembly of the two frames (160, 162) forming a framework (101) delimiting an internal opening (134) intended for the insertion of a conveyor (54) on which cases (12) of bottles (14) run in a running direction (X), the internal opening (134) having a dimension along a direction (Y, Z) orthogonal to the running direction (X) of between 300 mm and 1000 mm, at least one chip reader (136, 138, 140 and 142) is inserted in the framework (101),
the method comprising a step of:
- installing the first frame (160) in position so that the first frame (160) surrounds the conveyor (58), and
- assembling the second frame (162) to the first frame (160).
